# EUROPÄISCHE PATENTSCHRIFT

(11) **EP 0 508 213 B1**
(45) Veröffentlichungstag und Bekanntmachung des Hinweises auf die Patenterteilung: **02.08.1995**
(21) Anmeldenummer: 92105093.6
(22) Anmeldetag: 25.03.1992
(51) Int. Cl.: G01P 1/14, G07C 5/08, G01C 21/20

(54) **Verfahren zur Erfassung und Auswertung von Daten zur Ermittlung einer ungeradlinigen Bewegung eines Fahrzeuges**
Method for detecting and evaluating data for determination of non-rectilinear vehicle motion
Méthode de détection et d'évaluation de données pour déterminer le mouvement non-rectiligne d'un véhicule

(30) Priorität: 06.04.1991 DE 4111171
(43) Veröffentlichungstag der Anmeldung: 14.10.1992
(73) Patentinhaber: Mannesmann Kienzle GmbH (HR B1220), 78052 Villingen-Schwenningen (DE)
(72) Erfinder: Hilger, Gernot, Dipl.-Phys., D-7218 Trossingen (DE); Gruler, Martin, Dipl.-Ing. (FH), D-78554 Aixheim (DE)

(56) Entgegenhaltungen:
- EP-A- 0 120 691
- EP-A- 0 358 320
- EP-B- 0 118 818
- DE-A- 3 925 378
- DE-B- 2 322 299

## Beschreibung

Die Erfindung betrifft ein Verfahren zur Erfassung und Auswertung von Daten zur Ermittlung einer ungeradlinigen Bewegung eines Fahrzeuges.

Kombinierte Meß- und Registriervorrichtungen zum Messen von Veränderlichen der Bewegung werden beispielsweise in fahrzeuggebundenen Geräten eingesetzt, die im Falle eines Unfallereignisses zur objektiven Klärung der Schuldfrage Aufschluß über die vorangegangene Fahrweise geben.

Eine Vorrichtung dieser Art ist beispielsweise im EP-B-0 118 818 hinsichtlich ihres Aufbaus und ihrer Datenorganisation beschrieben. Diese Schrift erwähnt im beschreibenden Teil auf Seite 2, Spalte 2, Zeilen 25 bis 35 die bekannte Tatsache, daß die bloße Aufzeichnung von Längs- und Querbeschleunigung nicht ausreicht, um nach einem äußeren Triggerimpuls, der z. B. durch einen Aufprall des Fahrzeuges ausgelöst werden kann, unzweideutig und wahrheitsgetreu die Bewegungsbahn des Fahrzeuges zu rekonstruieren. Eine konkrete, technische Lösung für dieses Problem wird jedoch nicht aufgezeigt.

Ebenso bezieht sich die DE-B-23 22 299 auf eine Vorrichtung zur Registrierung von Betriebsdaten eines Fahrzeuges unter Verwendung von Gebern zur Erfassung der Längs- und Querbeschleunigung, jedoch ohne auf konkrete Möglichkeiten zur Rekonstruktion der Bewegungsbahn des Fahrzeuges einzugehen, deren Kenntnis aber gerade für denjenigen, der sich zur Klärung der Schuldfrage mit dem Unfallhergang befaßt, so wichtig ist.

Die Aufgabe, die der vorliegenden Erfindung zugrunde liegt, ist es somit, jede krummlinige Bewegungsbahn eines Fahrzeuges in einem beliebigen, durch einen äußeren Triggerimpuls definierten Zeitintervall mit besonders einfachen Mitteln rekonstruierbar zu machen, wobei die Lösung den fahrzeugtypischen Gegebenheiten gerecht werden und damit störunempfindlich, großserienfertigungsfähig und kostengünstig sein muß.

Die erfindungsgemäße Lösung sieht vor, daß mit einer magnetfeldsensierenden, zweikanalig ausgebildeten Meßeinrichtung die beiden rechtwinklig aufeinander stehenden Komponenten des Flußdichtevektors eines äußeren, stationären Magnetfeldes erfaßt werden. In der Regel werden dabei die naturgegebenen Horizontalkomponenten des Erdmagnetfeldes detektiert. Die Erfindung nutzt mit einer Meßeinrichtung, die nach dem Induktionsprinzip arbeitet, das Vorhandensein eines äußeren, stationären Magnetfeldes sowie eine Relativbewegung des Fahrzeuges in diesem Feld.

Die Umstände spezieller Anwendungen mögen jedoch ein künstlich erzeugtes Magnetfeld erfordern, das relativ zum Fahrzeug ortsfest ist, so beispielsweise der Betrieb des Fahrzeuges in langen Tunnelröhren mit gegen Magnetfelder schirmender Wirkung oder andere, besondere Einsatzbedingungen, in denen das Erdmagnetfeld entweder nicht oder nicht in ausreichender Stärke zur Verfügung steht.

Eine bevorzugte Ausführung der magnetfeldsensierenden Meßeinrichtung arbeitet mit zwei rechtwinklig zueinander angeordneten Spulen, die die beiden Komponenten des in die Ebene der Bewegungsbahn des Fahrzeuges projizierten, in der Regel räumlichen Flußdichtevektors des äußeren Magnetfeldes erfassen. Die beiden Spulen sind jeweils Bestandteil einer Oszillatorschaltung, die am Ausgang ein magnetfeldabhängiges Frequenzsignal bereitstellt. Als Meßeinrichtung sind aber auch andere Anordnungen denkbar, wie z. B. diejenigen, die in elektronischen Kompassen zum Einsatz kommen. Jedoch bedingen diese einen höheren Aufwand.

Wird die Ausrichtung der fahrzeuggebundenen Meßeinrichtung in dem ortsfesten äußeren, stationären Magnetfeld dadurch geändert, daß das Fahrzeug seine Bewegungsrichtung ändert, ändert sich auch der magnetische Fluß durch die Spulen zufolge einer sich betragsmäßig ändernden Zerlegung der Komponenten des äußeren Magnetfeldes, und mithin ändert sich das Frequenzsignal am Ausgang der beiden Oszillatorschaltungen.

Die Frequenz-Meßsignale werden zum einen als Ereignis in einem überschreibbaren Halbleiterspeicher registriert, dessen Speicherzellenkonfiguration eine matrixförmige Netzebene mit einem Raster aus m Zeilen und n Spalten abbildet. Die Meßwertpaare werden derjenigen Speicherzelle zugeordnet, in deren Rasterfeld die Beträge der Meßwerte in Analogie zu einem Koordinatenpaar fallen. Zum anderen werden die Meßwertpaare mit den Absolutbeträgen ihrer Komponenten in einem zur Häufigkeitszählung parallelen Datenzweig in einen Ringspeicher eingelesen. Die Schleifendauer des Ringspeichers bestimmt die Dauer des Betrachtungszeitraums bzw. Zeitfensters, in welchem Daten für die Rekonstruktion der Bewegungsbahn des Fahrzeuges bereitgestellt werden. Solange kein Triggersignal erfolgt, wird der Dateninhalt des Ringspeichers innerhalb dieser Schleife kontinuierlich zyklisch überschrieben. Das Triggersignal kann manuell oder automatisch ausgelöst werden.

Führt die fahrzeuggebundene Meßeinrichtung nun beispielsweise eine Volldrehung in dem äußeren Magnetfeld durch, beschreibt die Häufigkeitsverteilung der in den Matrixspeicher eingelesenen Meßwerte einen Kreis, soweit keine äußeren Störgrößen vorhanden sind. In der Praxis weist die Kreislinie unter den üblichen Betriebsbedingungen eines Fahrzeuges sowohl eine vektorielle Mittelpunktsverschiebung gegenüber der ungestörten Lage als auch eine elliptische Verzerrung und eine ungleichförmige Kontur auf.

Um eine negative Beeinflussung der Meßeinrichtung durch ihre elektromagnetische Umwelt und durch Inhomogenitäten des äußeren Magnetfeldes zu kompensieren, die durch Körper aus ferromagnetischen Materialien in der näheren Umgebung der Meßeinrichtung innerhalb oder außerhalb des Fahrzeuges verursacht werden, sieht die Erfindung vor, daß vor jedem Einlesen eines neuen Meßwertpaares in den Matrixspeicher, z. B. durch Abfrage des CARRY-Flags, geprüft wird, ob mit dem anstehenden Inkrementierungsschritt die Speicherkapazität der Speicherzelle, der das Meßwertpaar in der zuvor beschriebenen Weise zugeordnet ist, überschritten wird. Ist das der Fall, so werden die Inhalte aller Speicherzellen des Matrixspeichers im gleichen Verhältnis herabskaliert, indem die Zählerstände aller Speicherzellen halbiert und bei nicht ganzzahligem Ergebnis im Sinne einer Gaußklammerfunktion auf die nächst kleinere Zahl abgerundet werden.

Um nur Meßwerte zu zählen, die tatsächlich durch eine Änderung der Bewegungsrichtung des Fahrzeuges hervorgerufen werden, erfolgt vorteilhafterweise vor dem Einsortieren der Meßwerte eine Abfrage eines Sensors, der die Querbeschleunigung des Fahrzeuges erfaßt. Nur wenn ein zuvor festgelegter Schwellwert der Querbeschleunigung überschritten wird, wird die Inkrementierung für die betreffende Speicherzelle freigegeben. Durch die unregelmäßig ungeradlinige Bewegung des Fahrzeuges entsteht auf der aus n mal m Speicherzellen bestehenden Netzebene eine Häufigkeitsverteilung in Form eines Ringgebirges, wobei die Gipfelhöhen den Zählerständen der Speicherzellen proportional sind.

Die Abfrage des Füllstandes jeder einzelnen Speicherzelle mit gegebenenfalls einer nachfolgenden, geeigneten Herabskalierung der Speicherinhalte aller Zellen kann z. B. auch bei jeder Inbetriebnahme des Fahrzeuges durch eine Initialisierungsroutine durchgeführt werden. Dadurch werden die Speicherinhalte bei der sich anschließenden Fahrt aktualisiert, und die neuen Meßwerte werden im Vergleich zu den aus der früheren Fahrt stammenden Meßwerten höher gewichtet.

Die fortlaufende Aktualisierung und wiederholte Herabskalierung der Speicherinhalte führt dazu, daß kurzzeitige, schnell veränderliche, durch lokale Einflußgrößen aus der Umgebung verursachte Störungen nach kurzer Zeit aus den Speicherinhalten herausfallen und nur die durch die Fahrzeugbeschaffenheit gegebenen und als konstant anzusehenden Einflußgrößen die grundsätzliche Lage des durch die Häufigkeitsverteilung entstandenen Ringgebirges bestimmen.

Im übrigen ist es sinnvoll, z. B. EMV-bedingte Einstrahlungsspikes durch eine Plausibilitätabfrage der Meßwerte erst gar nicht zur Abspeicherung gelangen zu lassen. Die Plausibilitätabfrage kann auch eine Prüfung im Hinblick auf überhaupt realistische Winkelgeschwindigkeiten einschließen. Langsam veränderliche Beeinflussungen, beispielsweise durch Temperatureinflüsse und Bauteilealterung, verändern zwar allmählich die Lage des Ringgebirges, jedoch beeinträchtigen sie nicht die grundsätzliche Aussagefähigkeit des Meßverfahrens. Dieses gilt gleichermaßen auch für Veränderungen in der von der geographischen Lage abhängigen Stärke des in der bevorzugten Ausführung als Hilfsgröße verwendeten Erdmagnetfeldes.

Um die in der Meßeinrichtung benötigte Speicherkapazität möglichst gering zu halten, erfolgt die Auswertung der Meßdaten im Hinblick auf die Ermittlung der Änderung der Bewegungsrichtung des Fahrzeuges zwecks Rekonstruktion der Bewegungsbahn mittels einer elektronischen Auswerteeinheit außerhalb der hier beschriebenen Vorrichtung. Dazu wird zunächst die Speicherzellenmatrix ausgelesen und nach dem Prinzip der kleinsten Fehlerquadrate eine geeignete Funktion zweier Veränderlicher an die Matrixdaten angepaßt. Dieses führt in der Regel zu einer elliptischen Funktion. Anschließend wird der Mittelpunkt dieser geometrischen Figur bestimmt.

Nachdem auch die Meßwerte aus dem Ringspeicher in die Auswerteeinheit übertragen wurden, wird in einem nächsten Schritt rechnerisch der Mittelpunktswinkel der Ellipse bestimmt, dessen einer Schenkel durch die Strecke zwischen dem Mittelpunkt der Ellipse und einem im Ringspeicher durch ein Frequenzsignalpaar hinterlegten Meßpunkt bestimmt ist und dessen anderer Schenkel parallel zur Richtung der Tangente an die Bewegungsbahn zu Beginn des Betrachtungszeitraums verläuft. Diese Richtung ist z. B. durch den ältesten im Ringspeicher hinterlegten Meßpunkt gegeben oder kann aus anderweitig aufgezeichneten Magnetfeld- und Beschleunigungsdaten ermittelt werden.

Auf diese Weise werden sukzessive zu allen im Ringspeicher hinterlegten Meßpunkten die Abweichungen von der geradlinigen Bewegung ermittelt. Zusammen mit zusätzlichen Fahrzeugbewegungsdaten, wie z. B. den Daten für die Längs- und Querbeschleunigung oder den Geschwindigkeitsdaten bzw. Zeit- und Wegdaten des Fahrzeuges, läßt sich aus den so ermittelten Winkelangaben die Bewegungsbahn des Fahrzeuges im durch den Triggerimpuls festgelegten Zeitintervall rekonstruieren.

Die erfindungsgemäße Lösung beseitigt nicht einfach nur zufriedenstellend den im Stand der Technik erkennbaren Mangel, indem sie der gestellten Aufgabe voll gerecht wird, sondern bietet außerdem für ihre bevorzugte Anwendung mehrere Vorteile:
1. Die Vorrichtung muß nach ihrer Installation im Fahrzeug zufolge fahrzeugspezifischer Gegebenheiten hinsichtlich ihrer Meßparameter nicht individuell kalibriert werden, da sich diese Vorrichtung aufgrund des gewählten Verfahrens stets selbst anpaßt, indem Meßwerte, die das Nutzsignal verfälschen können, prinzipbedingt nach kurzer Zeit eliminiert werden und somit das Auswerteergebnis nicht beeinträchtigen können.
2. Eine fahrzeugspezifische Einmessung der Vorrichtung ist zu Beginn ihrer Benutzung für ihre Gebrauchsfähigkeit ebenfalls nicht erforderlich. Damit kann der Einbauort der Vorrichtung im Fahrzeug vom Benutzer bestimmt werden.
3. Die im Fahrzeug vorzuhaltene Rechnerkapazität ist gering, da der Rechenalgorithmus zur Rekonstruktion der Bewegungsbahn in eine von der hier beschriebenen Vorrichtung getrennten, d. h. sich nicht in Baueinheit befindlichen Auswerteeinheit, die sich vorzugsweise außerhalb des Fahrzeuges befindet, verlegt ist. Diese Vorgehensweise ermöglicht einen besonders kostengünstigen Aufbau der Vorrichtung.
4. Der Stromverbrauch der gesamten Meßeinrichtung liegt im einstelligen mA-Bereich, was auch unter dem Aspekt des Einsatzes dieser Vorrichtung in Fahrzeugen, die den Explosionsschutzbestimmungen unterliegen, besonders vorteilhaft ist.
5. Der Aufbau der gesamten Vorrichtung ist langzeitstabil. Bauteiledriften durch Alterung oder Temperaturschwankungen werden vom Verfahren selbständig kompensiert.
6. Das Funktionsprinzip der Meßeinrichtung ist unabhängig von der Stärke des Erdmagnetfeldes und damit in jeder geographischen Lage ohne Eingriff in die Vorrichtung einsetzbar.
7. Die Vorrichtung arbeitet wartungs- und verschleißfrei. Da keine beweglichen Bauteile verwendet werden, ist diese Eigenschaft auch unter den rauhen Betriebsbedingungen von Fahrzeugen sichergestellt.

Die erfindungsgemäße Lösung soll nun noch anhand von Zeichnungen erläutert werden.

Es zeigen
Fig. 1 eine Skizze zur Verdeutlichung der Aufgabenstellung,
Fig. 2 den prinzipiellen Aufbau der Vorrichtung in Form eines Blockschaltbildes,
Fig. 3 ein exemplarisch die Häufigkeitsverteilung der eingelesenen Meßwerte darstellendes Histogramm,
Fig. 4 die Projektion des Histogramms in die xy-Ebene,
Fig. 5 eine Darstellung zur Veranschaulichung des Berechnungsverfahrens in der Auswerteeinheit.

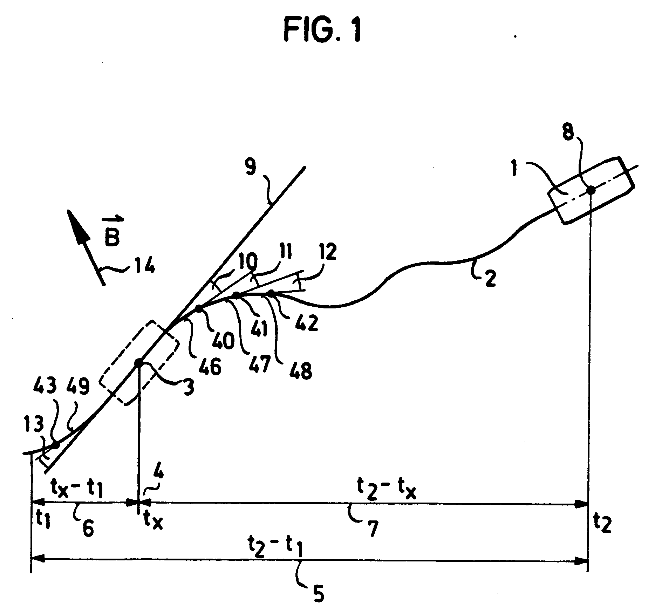

In Fig. 1 ist eine beliebige, krummlinige Bewegungsbahn 2 eines Fahrzeuges 1 dargestellt. Erfolgt nun im Zeitpunkt tₓ 4 ein Triggerimpuls, der beispielsweise durch eine einen Unfall detektierende, sensorische Vorrichtung ausgelöst werden kann, so wird mit diesem Signal ein Zeitfenster t₂-t₁ 5 eröffnet, in welchem die Bewegungsbahn 2 des Fahrzeuges 1 derart registriert wird, daß sie nach Durchführung des Verfahrens nach Anspruch 1 mit den beschriebenen Mitteln in der erfindungsgemäßen Weise rekonstruierbar ist.

Zum Triggerzeitpunkt 4 mag sich das Fahrzeug 1 an der Bahnposition 3 befinden. Der eingeblendete Betrachtungszeitraum 5 kann in bezug auf den Triggerzeitpunkt tₓ 4 einen Vorlauf tₓ-t₁ 6 und einen Nachlauf t₂-tₓ 7 einschließen. Beide Teilabschnitte 6, 7 ergeben in der Summe die Dauer des Zeitfensters 5.

Am Ende des Zeitintervalls 5 befindet sich das Fahrzeug 1 an der Bahnposition 8. Zur Rekonstruktion der im Zeitfenster t₂-t₁ 5 durchfahrenen Bewegungsbahn 2 wird nach Abspeicherung der bewegungsrelevanten Frequenzdatenpaare in der im Verfahren beschriebenen Weise, vorzugsweise ausgehend vom Triggerzeitpunkt 4, rechnerisch eine Tangente 9 an den Bahnpunkt 3 angelegt und, wie im folgenden noch näher erläutert wird, sukzessive die in der Skizze nur beispielhaft angedeuteten Winkelteilstücke 10, 11, 12 und 13 errechnet. Auf diese Weise wird die gesamte Bahnkurve 2 mittels einer Auswerteeinheit 24 unter Zuhilfenahme zusätzlicher Bewegungsdaten des Fahrzeugs 25 durch einen feingliedrigen Polygonzug, z. B. bestehend aus den Teilstücken 46, 47, 48, 49, rekonstruiert. Voraussetzung für die Funktionsfähigkeit der Meßeinrichtung ist ein stationäres Magnetfeld 14 beliebiger, aber während des Betrachtungszeitraums 5 hinreichend gleich bleibender Vorzugsrichtung außerhalb des Fahrzeuges 1 sowie eine Relativbewegung des Fahrzeuges 1 innerhalb dieses Feldes.

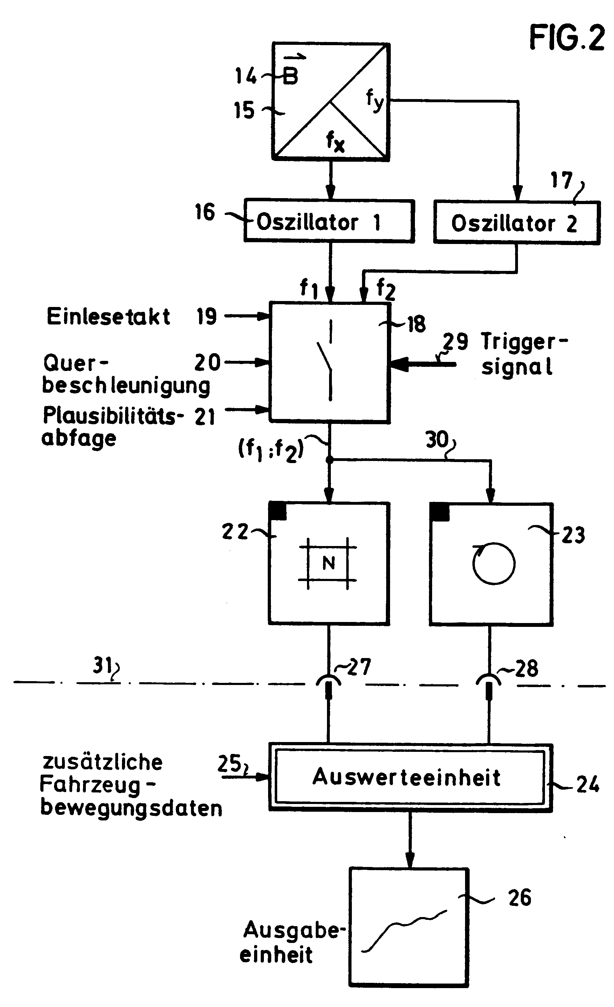

Fig. 2 zeigt anhand eines vereinfachten Blockschaltbildes den prinzipiellen Aufbau der Vorrichtung. Die induktive, zweikanalig aufgebaute Meßeinrichtung 15 verfügt über magnetfeldsensierende Mittel und erfaßt den zumeist räumlichen Flußdichtevektor 14 des äußeren, stationären Magnetfeldes derart, daß sie die beiden rechtwinklig aufeinander stehenden Komponenten des Flußdichtevektors 14, welche in der Ebene der Bewegungsbahn 2 des Fahrzeuges 1 liegen, nach einem funktionalen Zusammenhang in Frequenzsignale fₓ und f_{y} umwandeln. Die Ausgangsfrequenzsignale f₁ und f₂ der beiden jeweils in gleicher Weise aufgebauten Oszillatorschaltungen 16 und 17 bilden ein Meßwertpaar (f₁ ; f₂) das als nächstes für die weitere Datenverarbeitung einer Entscheidungseinheit 18 zugeführt wird.

In der Entscheidungseinheit 18, die sowohl in konventioneller Technik als Schaltungslogik aufgebaut als auch durch einen Mikroprozessor realisiert sein kann, wird festgelegt, mit welchem Takt 19 das Meßwertpaar (f₁; f₂) in die nachfolgenden Speichereinheiten 22 und 23 eingelesen wird und ob es überhaupt eingelesen wird. Der den Datenablegerhythmus steuernde Einlesetakt 19 ist in der bevorzugten Ausführung keine konstante Frequenz. Um im angetriggerten Zeitfenster 5, d. h. wenigstens im Zeitbereich t₂-tₓ 7, für die Auswertung eine höhere Auflösung zu erreichen, wird mit dem Eintreffen des Triggerimpulses 29 der Einlesetakt 19 für die Abspeicherung der Datenpaare um ein mehrfaches des Normaltaktes angehoben. Der Triggerimpuls 29 bestimmt das Zeitfenster 5, in welchem die Meßdaten unlöschbar gespeichert bleiben.

Die Entscheidung über das Einlesen ist in der bevorzugten Ausführung davon abhängig, ob die Querbeschleunigung 20 des Fahrzeuges 1 zum Meßzeitpunkt einen bestimmten, zuvor festgelegten Schwellwert überschritten hat. Diese Abfrage ist sinnvoll, da andernfalls während längerer, gerader Fahrstrecken das Speichervermögen bestimmter Speicherzellen des Matrixspeichers 22 durch wertmäßig unveränderte Meßwertpaare schnell ausgeschöpft würde, ohne daß dadurch eine sinnvolle Aussage gewonnen werden könnte. Da die Aufgabe der Vorrichtung jedoch darin besteht, Daten zu sammeln, die die Rekonstruktion der ungeradlinigen Bewegungsbahn ermöglichen, wird durch diese Maßnahme das wiederholte Einlesen gleichlautender Meßdaten vermieden.

In der bevorzugten Ausführung der Vorrichtung ist die Entscheidungseinheit 18 noch mit einer Plausibilitätsabfrage 21 verknüpft. Liegt das Meßwertpaar außerhalb eines zulässigen Meßbereichs, so gelangt dieses Datenpaar nicht zur Abspeicherung, da es sich offensichtlich um einen durch einen Störeinfluß hervorgerufenen Meßwert handelt. Hier wird beispielsweise berücksichtigt, daß sich der Gierwinkel eines Fahrzeuges nicht beliebig sprunghaft oder unstetig ändert.

Von der Entscheidungseinheit 18 gelangt das Meßwertpaar (f₁;f₂) zum einen in den Matrixspeicher 22 und zum anderen über einen parallelen Datenzweig 30 in den Ringspeicher 23. Im Matrixspeicher 22 wird die Ereignishäufigkeit der Meßwertpaare gezählt. Im Ringspeicher 23 werden die Absolutbeträge der Komponenten des Datenpaares nach dem FIFO-Prinzip abgelegt.

Nachdem, ausgelöst durch ein Triggersignal 29, die Meßdaten eines bestimmten Zeitintervalls 5 unlöschbar abgespeichert worden sind, können diese Datenpaare von einer Auswerteeinheit 24, die sich, wie durch die Trennlinie 31 angedeutet, nicht in Baueinheit mit der die Meßdaten erfassenden und aufzeichnenden Vorrichtung befindet, über eine vorzugsweise steckbare Datenschnittstelle 27, 28 ausgelesen werden. Natürlich sind an dieser Stelle zur Datenübertragung auch Schnittstellen anderer Art einsetzbar, z. B. drahtlose IR-Schnittstellen. Die Auswerteeinheit 24 verfügt über Mittel, die aus den in der Vorrichtung gesammelten Meßdaten die Bewegungsbahn 2 des Fahrzeuges 1 innerhalb des Betrachtungszeitraums 5 unter Zuhilfenahme zusätzlicher Fahrzeugbewegungsdaten 25, die z. B. die Längs- oder Querbeschleunigung oder die Geschwindigkeit bzw. Weg- und Zeitdaten sind, rekonstruieren und in einer Ausgabeeinheit 26 grafisch darstellen können.

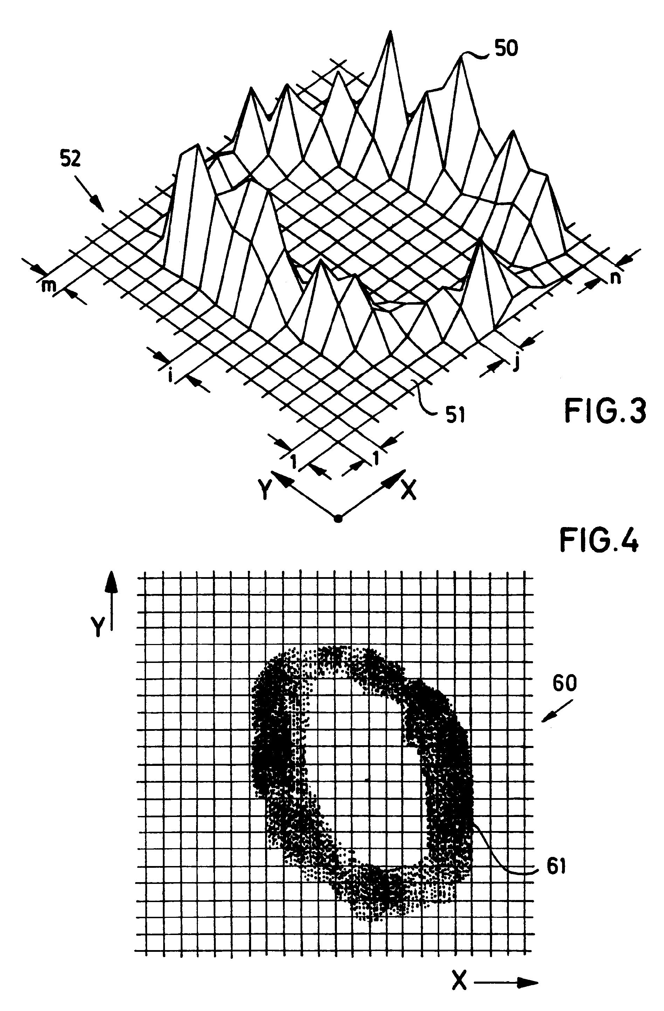

Fig. 3 zeigt die histogrammierten Ereignishäufigkeiten 50 der Meßwerte in einer dreidimensionalen Darstellung. Der Matrixspeicher bildet die gedanklich über die Meßeinrichtung gelegte Gitternetzebene 52 materiell ab und liest die Meßwertpaare in diejenige Speicherzelle 51 ein, der das Meßwertpaar aufgrund seiner Komponenten wie in einem kartesischen Koordinatensystem zugeordnet ist. Die matrixförmige Gitternetzebene 52 ist rechtwinklig, vorzugsweise quadratisch angelegt und besteht aus einem Raster mit m Zeilen in x-Richtung und n Spalten in y-Richtung. X und y bezeichnen die Raumachsen der Ebene, in welcher sich das Fahrzeug bewegt. Die Netzebene 52 ist so ausgerichtet, daß die x-Richtung parallel zur Tangente 9 verläuft. Durch die unregelmäßig ungeradlinige Bewegung des Fahrzeuges entsteht eine Häufigkeitsverteilung, deren dreidimensionale Darstellung der Zählerstände einem Ringgebirge ähnelt.

Die Fig. 4 zeigt die gleiche, jedoch zweidimensionale Häufigkeitsverteilung, wobei die durch die Zählerstände der Speicherzellen des Matrixspeichers 22 dargestellten Häufigkeiten in die Ebene 60 projiziert wurden und dadurch eine ringförmige Figur 61 entstehen lassen, deren Ringfläche unterschiedlich dicht mit Ereignishäufigkeiten belegt ist.

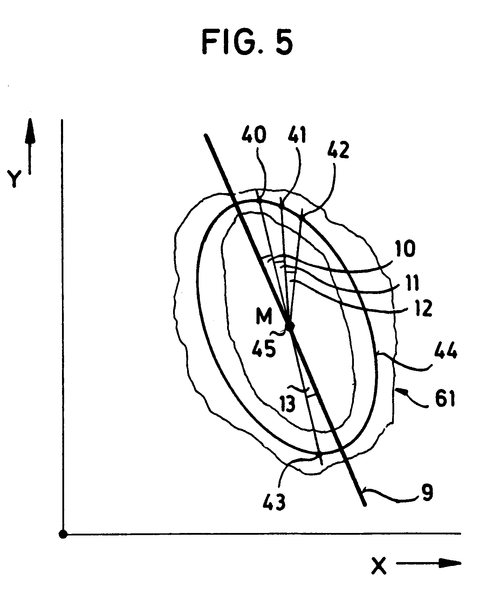

An diese zweidimensionale Verteilung der Ereignishäufigkeiten der Meßwertpaare wird in der Auswerteeinheit 24, wie in Fig. 5 dargestellt, rechnerisch eine Funktionalgleichung zweier Veränderlicher, das ist in der Regel eine elliptische Funktion 44, nach der Methode der kleinsten Fehlerquadrate angelegt. Anschließend wird der Mittelpunkt 45 dieser Figur, d. h. zumeist der Ellipse, bestimmt. Dann folgt die Berechnung der jeweiligen Mittelpunktswinkel, z. B. 10, 11, 12, 13, zu den einzelnen Meßpunkten, z. B. 40, 41, 42, 43, innerhalb des Zeitfensters 5 in der Reihenfolge, wie sie im Ringspeicher hinterlegt sind. Zusammen mit weiteren Fahrzeugbewegungsdaten 25 läßt sich dann die zweidimensionale Bewegungsbahn 2 des Fahrzeuges 1 innerhalb des anstehenden Betrachtungszeitraums 5 lückenlos und hinreichend genau durch einen feingliedrigen, geschlossenen Polygonzug, der z. B. durch die Teilstücke 46, 47, 48 und 49 angedeutet wird, rekonstruieren.

## Patentansprüche

1. Verfahren zur Erfassung und Auswertung von Daten zur Ermittlung einer ungeradlinigen Bewegung eines Fahrzeuges,
dadurch gekennzeichnet, daß
* mit einer magnetfeldsensierenden, zweikanalig ausgebildeten Meßeinrichtung die beiden rechtwinklig aufeinander stehenden Komponenten des Flußdichtevektors (14) eines äußeren, stationären Magnetfeldes, die in der Ebene der Bewegungsbahn (2) des Fahrzeuges (1) liegen, dadurch erfaßt werden, daß sie auf die Induktivitäten zweier Oszillatoren (16 und 17) einwirken, welche jeweils einen Frequenz-Meßwert (f₁) und (f₂) an ihrem Ausgang zur Verfügung stellen,
* daß die Frequenz-Meßwerte (f₁) und (f₂) über eine Entscheidungseinheit (18) als Meßwertpaar (f₁; f₂) an Halbleiter-Speichereinheiten (22 und 23) weitergeleitet werden,
daß das Meßwertpaar (f₁; f₂) zum einen in der einen als Matrixspeicher (22) ausgebildeten Speichereinheit, deren Speicherzellen eine matrixförmige Netzebene (52) abbilden, eingelesen und dort in der durch die Komponentenbeträge zugeordneten Speicherzelle (z. B. 51) als Ereignishäufigkeit durch Inkrementierung gezählt wird und zum anderen über einen zum Matrixspeicher (22) parallelen Datenzweig (30) mit den Absolutbeträgen seiner Komponenten in eine als Ringspeicher (23) betriebene Speichereinheit eingelesen wird,
* daß vor jedem Einlesen eines neuen Meßwertpaares (f₁; f₂) in den Matrixspeicher (22) geprüft wird, ob mit dem folgenden Inkrementierungsschritt die Speicherkapazität der Speicherzelle (51) überschritten wird,
* daß bei jeder Feststellung, daß beim nächsten Höherzählen die Speicherkapazität einer Speicherzelle (51) überschritten wird, die Inhalte aller Speicherzellen des Matrixspeichers (22) herabskaliert werden und
* daß ausgelöst durch einen äußeren Triggerimpuls (29) die Inhalte von Matrix- (22) und Ringspeicher (23) in einem beliebigen Zeitintervall (5) von fest vorgegebener Dauer vorzugsweise vor (6) und nach (7) dem Triggerzeitpunkt (4) unlöschbar gespeichert werden.

2. Verfahren nach Anspruch 1,
dadurch gekennzeichnet,
daß vor jedem Einlesen eines neuen Meßwertpaares (f₁; f₂) in den Matrix- (22) und den Ringspeicher (23) die Plausibilität des Meßwertpaares (f₁; f₂) geprüft wird, indem abgefragt wird, ob sich das Meßwertpaar (f₁; f₂) in einem zulässigen Meßbereich und/oder sich zu dem oder den vorangegangenen Meßwertpaaren in einem glaubwürdigen Verhältnis befindet.

3. Verfahren nach Anspruch 1 oder 2,
dadurch gekennzeichnet,
daß bei jeder Inbetriebnahme der Vorrichtung alle Zählerstände der Speicherzellen des Matrixspeichers (22) durch eine Initialisierungsroutine herabskaliert werden.

4. Verfahren nach einem der Ansprüche 1 bis 3,
dadurch gekennzeichnet,
daß die Herabskalierung der Zählerstände der Speicherzellen des Matrixspeichers (22) durch Halbierung der Zählerstände und durch anschließende Rundung des Ergebnisses auf die nächst kleinere ganze Zahl erfolgt.

5. Verfahren nach einem der Ansprüche 1 bis 4,
dadurch gekenzeichnet,
daß die Abspeicherung der Meßwertpaare (f₁; f₂) in den Matrix- (22) und Ringspeicher (23) nur dann erfolgt, wenn während der Betriebszeit des Fahrzeuges (1) die Querbeschleunigung (20) einen festgelegten Schwellwert überschreitet.

6. Verfahren nach Anspruch 1,
dadurch gekennzeichnet,
daß in einer Auswerteeinheit (24) Mittel vorgesehen sind, die nach der Methode der kleinsten Fehlerquadrate eine Funktion zweier Veränderlicher an die ringförmige Verteilung der im Matrixspeicher (22) als Ereignishäufigkeiten hinterlegten Meßwerte anlegen, den Mittelpunkt dieser geometrischen Figur bestimmen und die einzelnen Mittelpunktswinkel zu allen im Ringspeicher (23) hinterlegten Meßwertpaaren in der chronologischen Reihenfolge ihrer Abspeicherung berechnen.

7. Verfahren nach Anspruch 6,
dadurch gekennzeichnet,
daß die Auswerteeinheit (24) unter Zuhilfenahme zusätzlicher Bewegungsdaten (25) des Fahrzeuges (1) die zweidimensionale Bewegungsbahn (2) des Fahrzeuges (1) innerhalb des durch ein Triggersignal (29) festgelegten Betrachtungszeitraums (5) lückenlos und hinreichend genau durch einen feingliedrigen, geschlossenen Polygonzug rekonstruiert.

8. Verfahren nach Anspruch 7,
dadurch gekennzeichnet,
daß eine Ausgabeeinheit (26) vorgesehen ist und
daß die in der Auswerteeinheit (24) ermittelte Bewegungsbahn (2) des Fahrzeuges (1) grafisch angezeigt wird.

## Claims

1. A process for detecting and evaluating data for the determination of a non-rectilinear motion of a vehicle, characterized in that
* using a measuring device which senses magnetic fields and is constructed in two channels, the two components of the flow density vector (14) of an external stationary magnetic field which are at right angles to one another and lie in the plane of the path of motion (2) of the vehicle (1) are detected by the fact that they act on the inductances of two oscillators (16 and 17) which each provide a frequency measured value (f₁) and (f₂) at their output,
* the frequency measured values (f1) and (f₂) are passed on by way of a decision unit (18) as a pair of measured values (f₁; f₂) to semiconductor memory units (22 and 23),
the pair of measured values (f₁; f₂) is input on the one hand in the one memory unit which is constructed as a matrix store (22) and whereof the memory cells represent a matrix-type network level (52) and is counted there in the memory cell (e.g. 51) associated by the component values as a frequency of occurrence by incrementation and on the other hand is input by way of a data branch (30) parallel to the matrix store (22) with the absolute values of its components into a memory unit operated as a ring store (23),
* before each inputting of a new pair of measured values (f₁; f₂) into the matrix store (22) a check is made whether the memory capacity of the memory cell (51) is exceeded by the following incrementation step,
* each time it is established that with the next incrementation the memory capacity of the memory cell (51) is exceeded, the contents of all the memory cells of the matrix store (22) are scaled down, and
* triggered by an external triggering pulse (29), the contents of the matrix store (22) and the ring store (23) are stored non-deletably for any period of time (5) of a fixedly predetermined duration preferably before (6) and after (7) the point in time of triggering (4).

2. A process according to Claim 1, characterized in that before each input of a new pair of measured values (f₁; f₂) into the matrix store (22) and the ring store (23) the plausibility of the pair of measured values (f₁; f₂) is checked by interrogating whether the pair of measured values (f₁; f₂) is in a permissible measurement range and/or is in a plausible relationship with the preceding pair or pairs of measured values.

3. A process according to Claim 1 or 2, characterized in that each time the device is started up all the counter levels of the memory cells of the matrix store (22) are scaled down by an initialization routine.

4. A process according to one of Claims 1 to 3, characterized in that the counter levels of the memory cells of the matrix store (22) are scaled down by halving the counter levels and by subsequently rounding the result to the next smallest integer.

5. A process according to one of Claims 1 to 4, characterized in that the pairs of measured values (f₁; f₂) are stored in the matrix store (22) and ring store (23) only if during the operating time of the vehicle (1) the transverse acceleration (20) exceeds an established threshold value.

6. A process according to Claim 1, characterized in that there are provided in an evaluation unit (24) means which apply a function of two variables to the annular distribution of the measured values stored in the matrix store (22) as frequencies of occurrence in accordance with the method of least error squares, determine the centre point of this geometrical figure and calculate the individual centre point angles with respect to all the pairs of measured values stored in the ring store (23) in the chronological order of their storage.

7. A process according to Claim 6, characterized in that the evaluation unit (24) reconstructs, with the aid of additional motion data (25) of the vehicle (1), the two-dimensional path of motion (2) of the vehicle (1) within the observation period (5) established by a triggering signal (29) without gaps and sufficiently accurately by a closed progression in small steps.

8. A process according to Claim 7, characterized in that an output unit (26) is provided, and in that the path of motion (2) of the vehicle (1) determined in the evaluation unit (24) is displayed graphically.

## Revendications

1. Procédé pour l'acquisition et l'exploitation de données pour la détermination d'un déplacement non rectiligne d'un véhicule automobile.
caractérisé par le fait
* que, avec un dispositif de mesure bicanal, sensible aux champs magnétiques, les deux composantes disposées perpendiculairement l'une sur l'autre du vecteur de densité de flux (14) d'un champ magnétique stationnaire, externe qui sont situées dans le plan de la trajectoire (2) du véhicule (1) sont détectées du fait qu'elles agissent sur les inductivités de deux oscillateurs (16 et 17) qui fournissent à leur sortie respectivement un paramètre de mesure de fréquence (f₁) et (f₂),
* que les paramètres de mesure de fréquence (f₁) et (f₂) sont transférés, par l'intermédiaire d'une unité de décision (18), comme paire de paramètres de mesure (f₁ ; f₂) à des unités de mémoire à semi-conducteurs (22 et 23),
que la paire de paramètres de mesure (f₁ ; f₂) est inscrite, d'une part, dans l'une des unités de mémoire réalisée comme mémoire matricielle (22) dont les cellules de mémorisation forment un plan quadrillé (52) en forme de matrice, et comptée, à cet endroit, dans la cellule de mémorisation associée par les montants des composantes (par exemple 51), par incrémentation, comme fréquence d'événements et inscrite, d'autre part, par l'intermédiaire d'une branche de données (30) parallèle à la mémoire matricielle (22) avec les montants absolus de ses composantes, dans une unité de mémoire exploitée comme mémoire annulaire,
* que, avant toute inscription d'une nouvelle paire de paramètres de mesure (f₁ ; f₂) dans la mémoire matricielle (22), un contrôle est effectué afin de s'assurer qu'avec la phase d'incrémentation suivante, la capacité mémoire de la cellule de mémorisation ne sera pas dépassée,
* que, à chaque constatation que la capacité de mémoire d'une cellule de mémorisation (51) sera dépassée au prochain comptage en avant, les contenus de toutes les cellules de mémorisation de la mémoire matricielle (22) seront graduellement réduites et
* que, par l'apparition d'une impulsion de déclenchement externe (29), les contenus des mémoires matricielle (22) et annulaire (23) sont mémorisés, de manière ineffaçable, pendant un intervalle de temps (5) quelconque de durée rigoureusement prédéterminée de préférence avant (6) et après (7) l'instant de déclenchement (4).

2. Procédé selon la revendication 1,
caractérisé par le fait
que, avant chaque inscription d'une nouvelle paire de paramètres de mesure (f₁ ;f₂) dans les mémoires matricielle (22) et annulaire (23) a lieu un contrôle de vraisemblance de ladite paire de paramètres de mesure (f₁ ;f₂) en posant la question si ladite paire de paramètres de mesure (f₁ ;f₂) se trouve dans une gamme de mesure admissible et/ou qu'elle se trouve dans un rapport crédible avec la ou les paires de paramètres de mesure précédentes.

3. Procédé selon l'une quelconque des revendications 1 ou 2,
caractérisé par le fait
qu'à chaque mise en service du dispositif, toutes les cotes de compteur des cellules de mémorisation de la mémoire matricielle (22) sont graduellement réduites par une routine d'initialisation.

4. Procédé selon l'une quelconque des revendications 1 à 3,
caractérisé par le fait
que la réduction graduelle des cotes de compteur des cellules de mémorisation de la mémoire matricielle (22) se fait par dédoublement desdites cotes de compteur et par arrondissement consécutif du résultat au chiffre entier immédiatement inférieur.

5. Procédé selon l'une quelconque des revendications 1 à 4,
caractérisé par le fait
que le stockage des paires de paramètres de mesure (f₁ ;f₂) dans les mémoires matricielle (22) et annulaire (23) n'aura lieu que lorsque, pendant le temps de service du véhicule (1), l'accélération transversale (20) dépasse une valeur de seuil déterminée.

6. Procédé selon la revendication 1,
caractérisé par le fait
que dans une unité d'exploitation (24) sont prévus des moyens qui appliquent, selon la méthode des moindres carrés, une fonction de deux variables à la distribution annulaire des paramètres de mesure stockés comme fréquences d'événement dans la mémoire matricielle (22), déterminent le centre de cette figure géométrique et calculent les différents angles au centre par rapport a tous les paramètres stockés dans la mémoire annulaire (23) dans l'ordre chronologique de leur stockage.

7. Procédé selon la revendication 6,
caractérisé par le fait
que, en faisant appel à des paramètres de déplacement supplémentaires (25) du véhicule (1), l'unité d'exploitation (24) reconstruit, sans solution de continuité et avec une précision suffisante, la trajectoire bidimensionnelle (2) du véhicule (1), en l'espace de la période d'observation (5) déterminée par un signal de déclenchement (29), par une ligne polygonale gracile fermée.

8. Procédé selon la revendication 7,
caractérisé par le fait
qu'il est prévu une unité de sortie (26) et
que la trajectoire (2) du véhicule (1) déterminée dans l'unité d'exploitation (24) est affichée sous forme d'image graphique.
